(19) Europäisches Patentamt
European Patent Office
Office européen des brevets

(11) **EP 3 445 964 B1**

(12) **EUROPEAN PATENT SPECIFICATION**

(45) Date of publication and mention
of the grant of the patent:
**09.10.2019 Bulletin 2019/41**

(51) Int Cl.:
*F02M 25/00* (2006.01)   *F01N 3/20* (2006.01)
*F02D 13/02* (2006.01)   *F02D 41/00* (2006.01)
*F02D 41/14* (2006.01)   *F02M 26/01* (2016.01)
*F02D 21/08* (2006.01)   *F02D 19/12* (2006.01)

(21) Application number: **16751315.9**

(22) Date of filing: **03.08.2016**

(86) International application number:
**PCT/FI2016/050547**

(87) International publication number:
**WO 2018/024937 (08.02.2018 Gazette 2018/06)**

(54) **INTERNAL COMBUSTION ENGINE WITH COOLED INTERNAL EXHAUST GAS RECIRCULATION AND SCR CATALYST**

BRENNKRAFTMASCHINE MIT GEKÜHLTER INTERNER ABGASRÜCKFÜHRUNG UND SCR-KATALYSATOR

MOTEUR À COMBUSTION INTERNE AVEC RECIRCULATION DE GAZ D'ÉCHAPPEMENT INTERNE REFROIDIE ET CATALYSEUR SCR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.02.2019 Bulletin 2019/09**

(73) Proprietor: **Wärtsilä Finland Oy**
**65100 Vaasa (FI)**

(72) Inventor: **LIAVÅG, Lars-Ola**
**FI-65380 Vaasa (FI)**

(74) Representative: **Genip Oy**
**Heikinkatu 7**
**48100 Kotka (FI)**

(56) References cited:
**WO-A1-2013/124532**   **WO-A2-2009/134831**
**US-A1- 2009 250 041**   **US-A1- 2013 232 952**

EP 3 445 964 B1

## Description

The present invention relates to a method of operating an internal combustion piston engine according to the preamble of claim 1.

The present invention relates also to an internal combustion piston engine.

## Background art

The operational requirements of combustion engines in respect to the environmental issues are becoming more and more demanding. Emissions, particularly nitrogen oxide (NOx) emissions of internal combustion engine are subject to stringent regulations and in order to save the nature these stringent regulations are tightening. In order to cope with such requirements there are various techniques available by means of which the gaseous emissions may be controlled when the engine is running. Therefore, internal combustion engines are continuously developed to be environmentally friendly but still efficient in power. Namely, it is not desirable that the overall performance of the engine will suffer resulted from actions aiming to reduce the emissions.

Exhaust gas recirculation (EGR) is commonly used to reduce NOx emissions. In the EGR, portion of the exhaust gas is guided back into the cylinders of the engine. The EGR system can be either internal or external. In an external EGR systems exhaust gas is recirculated from the exhaust gas duct into the intake duct whereas in the internal EGR system a portion of the exhaust gas is trapped within the cylinder or wherein the exhaust gas from the exhaust duct is substantially directly guided to flow back into the combustion chamber.

US 6038860 A discloses a system for recirculating exhaust gas in a turbocharged internal combustion engine wherein a selected volume of exhaust gas is recirculated from the exhaust manifold to the intake manifold via a recirculation conduit. A flow of cool intake air is diverted to bypass the engine via a bypass conduit and the recirculating exhaust gas is cooled in the recirculation conduit by using the flow of diverted intake air.

US 2009/0250041 A1 discloses a device for purifying exhaust gas of a diesel engine comprising a continuously regenerating diesel particulate filter that uses a catalyst. A second continuously regenerating diesel particulate filter of a small capacity is disposed in a by-path that by-passes the exhaust gas passage of the diesel engine equipped with the continuously regenerating diesel particulate filter. The particulate matter is trapped by the second continuously regenerating diesel particulate filter in the region of low exhaust gas temperatures. A homogeneous charge compression ignition is executed by advancing the timing for injecting the fuel into the cylinders to reduce the formation of particulate matter. Therefore, the particulate matter can be trapped to a sufficient degree despite the second continuously regenerating diesel particulate filter has a small capacity. To suppress the formation of NOx, further, the cooled exhaust gas is recirculated into the cylinders and, besides a urea-added SCR catalyst is disposed in the exhaust gas passage to reduce and decompose NOx in the exhaust gas to further reduce NOx.

A drawback of using an external EGR system is that impurities must be removed from the exhaust gas before introducing it back into the cylinders. If the impurities are not sufficiently removed from the recirculated exhaust gas, it might cause damages to engine parts in the flow path therein. Thus the external EGR systems can be rather complex.

Generally, the NOx emissions are reduced by reducing the temperature in the combustion chambers of the engine. For instance, using a so called Miller cycle is a well-known method to reduce the emission generation by reducing the temperature in the cylinder. The Miller cycle is disclosed in US Patent No. 2,670,595 A. In the Miller cycle, the modified intake valve closing timing is utilized and in compression ignition the intake valve closing timing is advanced. The intake valves are closed before the piston reaches the bottom dead center and the pressure and the temperature in the cylinder will be lower at the end of the compression stroke. In the internal EGR system, the pressure of the exhaust gas needs to be higher than that prevailing in the cylinder so as to cause the exhaust gas to flow back into the cylinder of the engine. The amount of the recirculated exhaust gas can be controlled by the intake valve opening and closing timing. Early opening of intake valves leads to a smaller amount of recirculated exhaust gas, and correspondingly, the early closing of the intake valves leads to a greater amount of recirculated exhaust gas.

WO 2013/124532 A1 discloses a method for operating an internal combustion engine comprising at least two different operating modes. In at least one operating mode the intake valves are closed during the intake stroke before bottom dead center for lowering the pressure in the cylinders, and internal exhaust gas recirculation is used by reopening the exhaust valves after the closing of the intake valves and before bottom dead center for allowing exhaust gas recirculation from the exhaust duct into the cylinders. Water is injected into the exhaust ports for cooling the recirculated exhaust gas. Different valve overlap durations are used in different operating modes for regulating the amount of the exhaust gas that is trapped within the cylinders an in at least one operating mode the amount of the recirculated exhaust gas is regulated by means of a by-pass valve that is arranged between an intake duct and an exhaust duct of the engine.

Even if such a method is advantageous as such it is an object of the invention to provide a method of operating an internal combustion piston engine in which the performance is improved compared to the prior art solutions.

## Disclosure of the Invention

The objects of the invention can be met substantially as is disclosed in the independent claims and in the other claims describing more details of different embodiments of the invention.

According to the invention, the method of operating an internal combustion piston engine executes the following steps while the engine is running:

- Opening an intake valve for introducing intake air into a cylinder of the engine via an intake duct,
- Closing the intake valve during an intake stroke before bottom dead center of a piston in the cylinder,
- Compressing the intake air in the cylinder,
- Feeding fuel into the cylinder of the engine and combusting the fuel in the cylinder generating exhaust gas,
- Opening an exhaust valve of the cylinder after combusting the fuel for guiding the exhaust gas from the cylinder into an exhaust duct, and
- Guiding a portion of the exhaust gas to return back from the exhaust duct into the cylinder via the exhaust valve during the intake stroke before the bottom dead center opening the exhaust valve for thus resulting in an internal exhaust gas recirculation, (EGR),
- Introducing a water based solution containing reductant to the exhaust gas in the internal exhaust gas recirculation stage, and
- Controlling the emissions in the exhaust gas by a selective catalytic reduction stage arranged in the exhaust gas duct downstream the engine.

This provides a method for operating an internal combustion piston engine which performance is considerably improved. The method provides an efficient way to reduce the overall emissions of the engine. Particularly, emission reduction is controlled at different locations or stages efficiently, namely in the cylinder of the engine and in the SCR unit downstream the engine making use of same water based solution in both emission reduction stages. Due to the fact of using a combination of two systems, the size of the selective catalytic reduction system can be reduced so that the combination of the systems results in adequate emission reduction. In addition, the burden of reducing emissions is divided in two systems and therefore each system is less loaded. This improves the durability and efficiency of the systems for reducing emissions of the engine. Specifically, the engine is still efficient while the emissions are reduced efficiently. Advantageously, only internal EGR is used.

The amount of the reductant in the water based solution is controllable based on operational parameters of the engine.

The method is applicable to all types of fuels. It is also applicable to so called direct injection engines where fuel - either all or only a pilot fuel - is injected directly to the combustion chamber and/or to a prechamber. The method is also applicable to cases where fuel is introduced as a fuel-air mixture to the combustion chamber.

The invention provides also a wide range of control because it allows firstly a controllable usage of internal EGR with controllable cooling effect of water based solution injection and additionally a controllable operation of the SCR by controllable amount of SCR reductant. The amount of reductant may be controlled by controlling the flow rate of the water based solution and/or the concentration of the SCR reductant in the water based solution. The concentration of the SCR reductant may be controlled by controlling the ratio of the reductant in the water or vice versa. The reductant may be for example urea or ammonia water-solution. By controlling the concentration of the SCR reductant it is possible to control the gas cooling in the internal EGR process by controlling the water amount and the operation of SCR process by controlling the reductant amount substantially independently. Most feasibly combinations can be found case by case making use of suitable experiments.

The invention provides also a quick response to the changes of reduction capacity e.g. in rapid engine load increasing situation. Additionally the obtained combined effect of internal EGR and SCR stage allows downsizing of both system compared to using of only one of them. It is also possible to effect on the share of the NOx reduction between the internal EGR and SCR stage.

According to an embodiment of the invention the water based solution comprises the reductant used in the selective catalyst reduction stage. This way the reductant water based solution used in the selective catalyst reduction unit of the engine may be used also for cooling the exhaust gas in the internal recirculation process improving the reduction of NOx emissions further.

According to an embodiment of the invention after guiding exhaust gas from the cylinder into the exhaust duct the exhaust valve is first closed and later re-opened and a portion of the exhaust gas is guided back from the exhaust duct into the cylinder via the re-opened exhaust valve.

According to an embodiment of the invention, the water based solution is injected to the exhaust port of the cylinder and this way the internally recirculated exhaust gas is cooled. This also reduces emission generation, particularly NOx generation, in the combustion.

According to an embodiment of the invention, the water based solution is injected directly into a combustion chamber of the cylinder for cooling the recirculated exhaust gas therein and reducing emission generation in the cylinder.

According to an embodiment of the invention, the exhaust valve is opened after closing the intake valve.

According to an embodiment of the invention, the intake air is pressurized by a turbocharger and the exhaust valve is opened before closing the intake valve, and the operation of the turbocharger is controlled to maintain the pressure in the combustion chamber lower than in the exhaust duct.

According to an embodiment of the invention, the method comprises a step of monitoring one or more of reductant consumption, water consumption and fuel consumption and controlling the amount of the water based solution and/or the concentration of the reductant in the water based solution introduced into the cylinder in response of the monitored values.

According to an embodiment of the invention, the method comprises step of measuring engine's load and controlling the injection, such as amount of the water based solution and/ or the concentration of the reductant in the water based solution in response of measured engine's load.

According to an embodiment of the invention, the method comprises step of measuring engine's emissions and controlling the injection amount of the water based solution and/or the concentration of the reductant in the water based solution in response of measured engine's emissions.

According to an embodiment of the invention, only after the measured or otherwise determined engine's emissions are above a predetermined set value the reductant is added to the water based solution or the amount of the reductant is increased and when the measured or otherwise determined engine's emissions are below a predetermined set value, the amount of the reductant is decreased or the water based solution without the reductant can be used.

According to an embodiment of the invention, the method comprise step of receiving a signal indicating geographical position of the engine and controlling the injection of the water based solution and/or concentration of the reductant in the water based solution in response to the signal indicating geographical position. Advantageously, the engine is provided with a global positioning system (GPS) receiver to receive GPS signal. Therefore, local emission requirements are controlled and met efficiently.

The reductant that may be for example urea or ammonia water-solution.

The method comprises advantageous at least one step of turbocharging engine wherein according to an embodiment of the invention the step of controlling the emissions in the exhaust gas by a selective catalytic reduction stage is performed upstream a turbine of a last turbocharger in the exhaust gas flow direction. In this case the position of the selective catalytic reduction stage between the turbine stages may be selected e.g. based on the required temperature level of the catalyst process in the SCR unit.

The method comprises advantageous at least one step of turbocharging engine wherein according to another embodiment of the invention the step of controlling the emissions in the exhaust gas by a selective catalytic reduction stage is performed downstream a turbine of a last turbocharger in the exhaust gas flow direction.

The invention provides the emission reduction arrangement to be compact and still providing as good as or even better emission reduction than prior art emission reduction arrangements.

According to the invention, an internal combustion piston engine comprises an emission reduction arrangement, which engine comprises an intake duct for introducing intake air into cylinders of the engine and at least one intake valve for each cylinder of the engine for opening and closing flow communication between the intake duct and the cylinder, an exhaust duct and at least one exhaust valve for each cylinder for opening and closing flow communication from the cylinder to the exhaust duct, the emission reduction arrangement is provided with means to control the operation of the exhaust valve for allowing internal exhaust gas recirculation from the exhaust duct into the cylinders, and the emission reduction arrangement is provided with a water based solution injection system arranged to provide water based solution to the cylinders (to exhaust gas in internal exhaust gas recirculation) wherein the exhaust duct is further provided with a selective catalytic reduction (SCR) unit arranged downstream of the engine, and wherein the emission reduction arrangement is provided with a reductant admission system in connection with the water based solution injection system for controllably admitting SCR reductant in to the water based solution for use in the selective catalytic reduction (SCR) unit.

According to an embodiment of the invention, the emission reduction arrangement comprises a computer control unit comprising executable instructions to carry out the method for operating the internal combustion piston engine according to claims 1-14.

According to an embodiment of the invention an advantageous amount of water based solution expressed as a ratio of mass flow rate of water based solution to mass flow rate of fuel i.e.

$$WFR = \frac{q_{m\,water\,based\,solution}}{q_{m\,fuel}}, \text{ is } 0 < WFR < 1. \text{ When}$$

the engine is running at partial loads the amount of water based solution is smaller than when the engine is running a full load.

According to experiments made it has been found that usable amount of water based solution expressed as a ratio of mass flow rate of water based solution to mass flow rate of fuel i.e.

$$WFR = \frac{q_{m\,water\,based\,solution}}{q_{m\,fuel}}, \text{ may be extended in}$$

some cases to be $0 < WFR \leq 1,5$.

As an example, when the engine is running at load < 75% of nominal maximum load, the WFR = 0,01 - 1,0; and when the engine is running at loads 40% - 110% of nominal maximum load the WFR = 0,5 - 1,5.

A straightforward embodiment is provided when the concentration of the reductant is constant and only the amount of water is adjusted, but adjusting both the concentration of the reductant and the amount of water provides precise control for both internal EGR and SCR process. It is advantageous to minimize the amount of introduced water as long as desired effect is obtained. Particularly at low loads of the engine the risk of smoke and particulate emissions is increased and the control of amount of water should take this into account.

The exemplary embodiments of the invention presented in this patent application are not to be interpreted to pose limitations to the applicability of the appended claims. The novel features which are considered as characteristic of the invention are set forth in the appended claims.

**Brief Description of Drawings**

In the following, the invention will be described with reference to the accompanying exemplary, schematic drawings, in which

Figure 1 illustrates a turbocharged internal combustion piston engine comprising an emission reduction arrangement according to an embodiment of the invention, and
Figure 2 illustrates a turbocharged internal combustion piston engine comprising an emission reduction arrangement according to another embodiment of the invention.

**Detailed Description of Drawings**

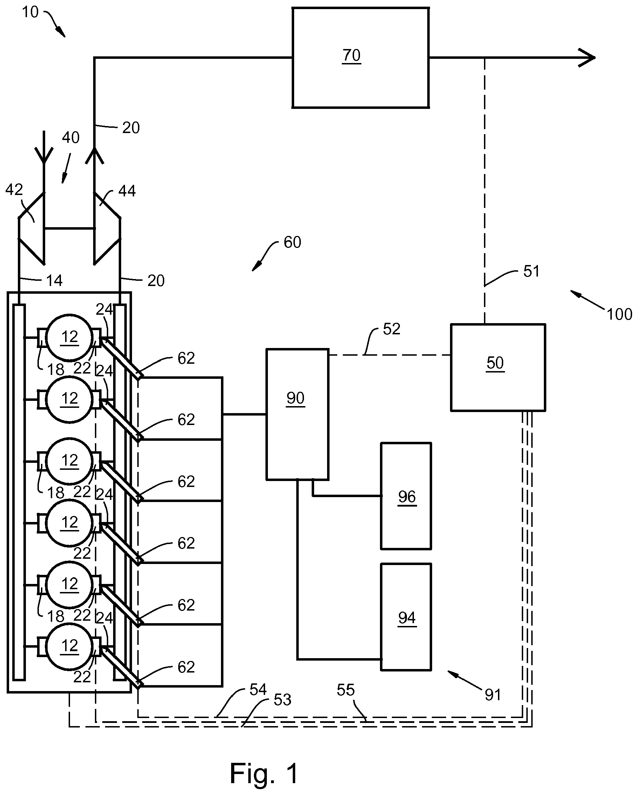

Figure 1 depicts schematically a turbocharged internal combustion piston engine 10. Here the engine comprises six cylinders 12 arranged in line, as an example. The number of cylinders as well as the configuration may vary depending on the case. There is also an emission reduction arrangement 100 arranged in connection with the engine 10.

Generally, in a four stroke engine the operation of one cylinder can be divided into four phases: 1) intake stroke, during which the intake air is admitted to the cylinder, 2) compression stroke wherein the piston moves towards its top dead center position and the combustion air/charge is compressed in a closed combustion chamber, 3) power stroke wherein the expanding gas resulted from the fuel combustion forces the piston down the cylinder turning the crankshaft, and 4) exhaust stroke for exhaust gas removal from the cylinder. The sequence of the phases from 1) to 4) is repeated continuously when the engine is running.

The turbocharged internal combustion piston engine 10 comprises an intake duct 14 for introducing intake air into the cylinder(s) 12 of the engine 10. The engine 10 is further provided with an exhaust duct 20 for discharging exhaust gas from the cylinder(s) 12 after combustion. The turbocharged internal combustion piston engine 10 is provided with a turbocharger 40 comprising a compressor 42 arranged to the intake duct 14 and a turbine t arranged to the exhaust duct 20.

The engine 10 comprises at least one intake valve 18 for each cylinder 12 of the engine 10, which intake valve 18 is arranged to open or close flow communication from the intake duct 14 to the cylinder 12 of the engine 10. The intake valve 18 is arranged in a cylinder head of the engine 10. During operation of the engine 10, the intake air is pressurized by the compressor 42 and usually cooled by a charge air cooler (not shown) and then introduced into the cylinder 12 by opening at least one intake valve 18 of the cylinder 12. The intake valve 18 is closed during an intake stroke before bottom dead center (BDC) of a piston in the cylinder 12. The intake stroke means the movement of the piston from top dead center (TDC) to bottom dead center (BDC) during which, intake air is introduced to the cylinder 12 via the open intake valve 18. The closing of the intake valve 18 during the intake stroke before the bottom dead center of the piston in the cylinder 12 lowers the effective pressure and temperature of the charge air in the cylinder 12 due to the expansion of the intake air during the end of the intake stroke when the intake valve 18 is closed This way, both the pressure and the temperature will be lower also at the end of the compression stroke resulting in lower NOx emission generation.

In a direct injection engines, such as direct injection diesel engines fuel is fed directly into the cylinder 12 of the engine 10 after the compression stroke and combusted in the combustion chamber of the cylinder generating exhaust gas. Each cylinder 12 is provided with at least one exhaust valve 22 for opening or closing flow communication between the cylinder 12 i.e. the combustion chamber and the exhaust duct 20. After combusting the fuel in the cylinder 12, the exhaust valve 22 of the cylinder 12 is opened for guiding the exhaust gas from the cylinder 12 into the exhaust duct 20 caused by the pressure in the combustion chamber and the movement of the piston towards to top dead center. After the exhaust stroke, the cycle starts over by the intake stroke. In order to further reduce the NOx emissions, the engine 10 and/or the emission reduction arrangement 100 in connection with the engine 10 is provided with means 50, 55 to control the exhaust valve 22 for allowing and providing an internal exhaust gas recirculation from the exhaust duct 20 into the cylinders 12. The means for controlling the exhaust valve 22 comprises a controller computer unit 50, executable instructions running therein, a signal path 55 between the controller computer 50 and the valves 22 and an actuator system (not shown) in the valves by means of the which the position of the valve is controllable accordingly. Operation of the exhaust valve 22 can be controlled, for instance, by a hydraulic or an electro-hydraulic system, or a cam-driven mechanism that is provided with hydraulic means for controlling the closing timing of the valve. This way, during the intake stroke before the bottom dead center, the exhaust valve 22 may be re-opened and a portion of the exhaust gas is allowed to return back from the exhaust duct 20 into the cylinder 12 of the engine thus resulting in an internal exhaust gas recirculation (EGR). In the internal exhaust gas recirculation process, the exhaust gas is returned back into the cylinder 12 directly from the exhaust gas duct 20. In order to provide the function of exhaust gas flowing back from the exhaust duct 20 into the cylinders 12 the pressure in the exhaust duct 20 must be higher than the pressure in the cylinder 12, and the exhaust valve 22 must be open. The amount of exhaust gas that is returned back into the cylinder 12, depends i.a. on 1) the pressure difference between the exhaust duct 20 and the cylinder 12, 2) the duration of period of time between the exhaust valve 22 opening and closing and 3) on the variable/optional valve overlap of the intake valve and the exhaust valve. If the overlap of the exhaust valve and the intake valve is very small or minimized, higher EGR rate during the internal exhaust gas recirculation is achieved. The invention may be implemented so that during the cycle of the combustion process an exhaust valve 22 of the cylinder 12 is opened after combusting the fuel for guiding the exhaust gas from the cylinder 12 into an exhaust duct 20, and thereafter closed, and additionally re-opened during or after the intake stroke before the bottom dead center.

According to an embodiment of the invention, the intake air is pressurized by the turbocharger 40. During the intake stroke the exhaust valve 22 is opened before closing the intake valve and the operation of the turbocharger 40 is controlled such that the pressure in the cylinder 12 is maintained lower than the pressure in the exhaust duct 20.

According to another embodiment of the invention, the exhaust gas valve 22 is opened only after closing the intake valve 18. In this embodiment the operation of the turbocharger 40 is controlled such that the pressure in the cylinder 12 remains lower than the pressure in the exhaust duct 20 after the intake valve 18 has been closed. The operation of the turbocharger may be controlled by a waste-gate or using variable geometry turbocharger.

As is shown in Figure 1, the emission reduction arrangement 100 comprises a selective catalytic reduction (SCR) unit 70 arranged in connection with the exhaust duct 20. The emission reduction arrangement 100 further comprises a water based solution injection system 60 in connection with the engine 10. Each cylinder is provided with an injector 62 for injecting a water based solution to the exhaust gas in the internal exhaust gas recirculation of the engine.

The selective catalytic reduction (SCR) unit 70 comprises at least one catalytic element also known as SCR catalyst. In the selective catalytic reduction unit 70, nitrogen oxide emissions (NOx emissions) are reduced. Advantageously ammonia or urea, as water solution, is used in water based solution. At suitable temperature nitrogen oxides are reduced into nitrogen ($N_2$) and water vapour ($H_2O$). It should be noted that the direction "downstream" is defined with respect to the direction of exhaust gas that flows away from the engine 10 in the exhaust duct 20. Due to the fact that the reductant is introduced in the engine it is ensured the reductant is evaporated, decomposed and/or mixed with the exhaust gas prior to entering the SCR unit 70.

The emission reduction arrangement 100 comprises further a dosing unit 90. Also, the emission reduction arrangement 100 is provided with a reductant admission system 91 comprising a source of a SCR reductant 94 which is arrange to provide reductant to be added into the water based solution prepared in the dosing unit 90. The computer control unit 50 is arranged to control the emission reduction during the operation of the engine 10. Figure 1 illustrates also a source 96 of water for providing the water to the water based solution. The dosing unit 90 receives the water from the source of water 96 and guides the water based solution containing a controlled amount of reductant according to the instructions to the water based solution injection system 60. Thus, the reductant source 94 is connected to the dosing unit 90 and the dosing unit 90 receives the reductant for providing the reductant solution, e.g. the water-urea solution.

Dotted lines in the figure illustrate control signal paths such cabling or data lines between the parts of the arrangement 100. Even if not specifically shown in the figure there may be suitable probes or measurement transmitters providing respective measurement signals in connection with the engine and the emission reduction arrangement 100.

According to an embodiment of the invention the dosing unit 90 and thus the injection process of the water based solution, as well as the concentration of the reductant in the water based solution is controlled in response of engine's emissions measured downstream the selective catalytic reduction unit 70. There is a first control signal path 51 arranged to transmit emission information of the exhaust gas downstream the selective catalytic reduction unit 70 in the exhaust duct 20. One end of the first control signal path 51 is located downstream the selective catalytic reduction unit 70, provided with a suitable probe for determining the NOx emissions, while the other end is connected to the computer control unit 50. This way the computer control unit 50 receives information of the emission content in the exhaust duct 20 via the first control signal path 51 and the first signal path 51 transmits a control signal indicating NOx emissions in the exhaust duct 20 to the computer control unit 50. Advantageously, the computer control unit 50 comprise a NOx analyser for analysing NOx content of the exhaust gas. This way, an introduction of the water based solution and/or reductant is controlled in response to the measured engine's emissions.

A second signal path 52 of the computer control unit 50 is connected to the dosing unit 90 so as to control operation of the dosing unit based on specific instructions. The second signal path 52 transmits the instructions to control the dosage of the reductant into the water based solution injection system 60 and/or the flow rate of the water based solution to the injection nozzle arrangement 80 in response of measured and/or received signal or signals. The dosing unit 90 can controllably vary an amount of the reductant in the water based solution i.e. the concentration of the reductant in the water.

There is a third signal path 53 which is connected to the engine provided with means for determining engines speed and/or engines load. The third signal path 53 of the computer control unit 50 transmit information of engine's load or load related value and/or engine's speed. Therefore, according to an embodiment of the invention, injection of the water based solution and reductant is controlled in response of measured engine's load and/or speed. A fourth signal path 54 of the computer control unit 50 is connected to each injectors 62 so as to control the operation of the injectors 62 and dosing of the water based solution into the respective cylinders.

The water based solution injection system 60 comprises a plurality of injectors 62 for injecting the water based solution to the exhaust gas in internal exhaust gas recirculation. In the Figure 1, each of the injectors 62 of the water based solution injection system 60 is arranged in connection with a corresponding exhaust port 24 of the cylinder 12. The injection of the water based solution takes place close to the exhaust valve 22. This way the water based solution is injected to the exhaust port 24 of the cylinder 12 and the internally recirculated exhaust gas is cooled. When the temperature of the charge in combustion chamber is cooled the emission generation in the combustion is reduced. In other words, the water based solution is injected to the exhaust gas that is guided directly back into the cylinder. The engine 10 is provided with means to control the exhaust valve 22 for allowing internal exhaust gas recirculation from the exhaust duct 20 into the cylinders 12. The water based solution is injected to the exhaust gas in the exhaust gas recirculation before the exhaust valves 22 are closed. Namely, closing of the exhaust valves 22 terminates the exhaust gas recirculation. Alternatively the injectors 62 may be arranged to open directly to the cylinders 12 of the engine.

The computer control unit 50 comprises executable instructions to control the dosing of the water based solution and the concentration of the reductant therein. In case the engine is operated such that the generation of NOx emissions is low enough the emission reduction is practised by internal exhaust gas recirculation with injecting the water based solution with 0% of the reductant therein and when the emission generation is above a certain predetermined value the concentration of the reductant in the water based solution is increased thus starting the operation of the SCR unit.

According to an embodiment of the invention, the injection of water based solution and the concentration of the reductant is controlled in response to the signals indicating geographical position of the engine, particularly in response of geographical emission requirements. For instance, at an area where NOx emissions need to be very low, the water based solution with the reductant is used. At an area where NOx emissions can be higher (higher than in the very low NOx emission area), then the water based solution without the reductant or with low concentration of the reductant is used.

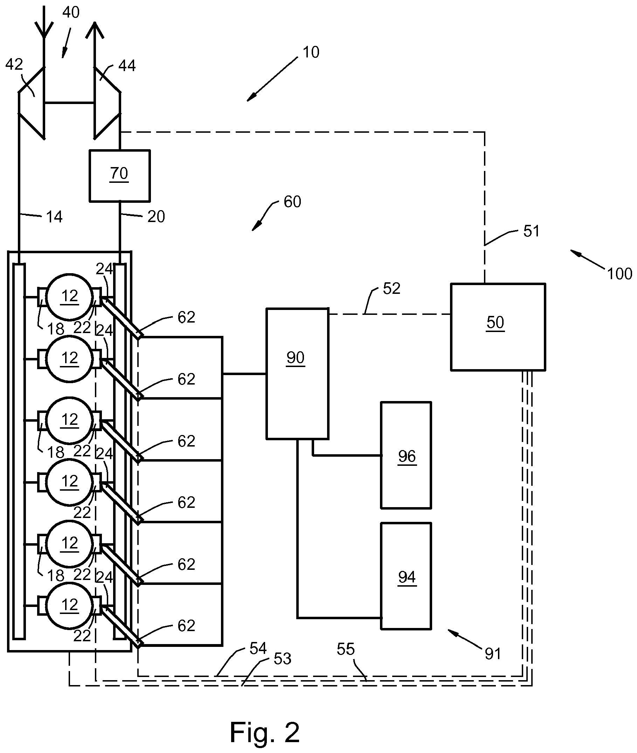

Figure 2 discloses a turbocharged internal combustion piston engine 10 according to another embodiment of the invention. Is otherwise similar to that shown in the figure 1 except that the emission reduction arrangement 100 comprises the selective catalytic reduction (SCR) unit 70 arranged in connection with the exhaust duct 20 downstream the engine but upstream the turbine 44 of the turbocharger 40. Thus the term downstream the engine in this connection means downstream the cylinder of the engine. And, even if not shown here it is conceivable also that the engine is provided with e.g. two turbochargers such that the turbines are connected in series and the compressors are connected in series respectively. In such case the selective catalytic reduction (SCR) unit 70 arranged in connection with the exhaust duct 20 downstream the engine but upstream the turbine 44 of the last turbocharger 40 in the exhaust gas flow direction. By proper selection of the position of the SCR unit 70 in respect to the turbine 44 (or turbines) it is possible to effect on the operation temperature of the SCR unit to meet the requirements of the catalyst and to obtain desired reactions case by case.

While the invention has been described herein by way of examples in connection with what are, at present, considered to be the most preferred embodiments, it is to be understood that the invention is not limited to the disclosed embodiments, but is intended to cover various combinations or modifications included within the scope of the invention, as defined in the appended claims. The details mentioned in connection with any embodiment above may be used in connection with another embodiment when such combination is technically feasible.

## Claims

1. A method of operating an internal combustion piston engine (10) whereby, while the engine (10) is running, the following steps are executed:

    - Opening an intake valve (18) for introducing intake air into a cylinder (12) of the engine (10) via an intake duct (14),
    - Closing the intake valve (18) during an intake stroke before bottom dead center of a piston in the cylinder (12),
    - Compressing the intake air in the cylinder (12),
    - Feeding fuel into the cylinder (12) of the engine (10) and combusting the fuel in the cylinder (12) generating exhaust gas,
    - Opening an exhaust valve (22) of the cylinder (12) after combusting the fuel for guiding the exhaust gas from the cylinder (12) into an exhaust duct (20),
    - Guiding a portion of the exhaust gas back from the exhaust duct (20) into the cylinder (12) via the exhaust valve (22) during the intake stroke before the bottom dead center thus resulting in an internal exhaust gas recirculation, and
- Controlling the emissions in the exhaust gas by a selective catalytic reduction stage (70) arranged in the exhaust gas duct (20) downstream of the engine (10),

**characterized in that** the method comprises the further step of

- Introducing a water based solution containing reductant to the cylinder in the internal exhaust gas recirculation stage.

2. A method according to claim 1, **characterized in that** the reductant in the water based solution introduced into the cylinder is used in the selective catalytic reduction stage (70).

3. A method according to claim 1, **characterized in that** after guiding exhaust gas from the cylinder (12) into the exhaust duct (20) the exhaust valve (22) is re-opened and guiding a portion of the exhaust gas back from the exhaust duct (20) into the cylinder (12) via the re-opened exhaust valve (22).

4. A method according to claim 1 or 2, **characterized in that** the reductant is urea.

5. A method according to claim 1 or 2, **characterized in that** the reductant is ammonia.

6. A method according to claim 1, **characterized in that** the water based solution is injected to the exhaust port (24) of the cylinder (12) for cooling the internally recirculated exhaust gas and reducing emission generation in the combustion.

7. A method according to claim 1, **characterized in that** the water based solution is injected directly into a combustion chamber of the cylinder (12) for cooling the recirculated exhaust gas therein and reducing emission generation in the cylinder (12).

8. A method according to claim 1, **characterized by** step of measuring engine's load and controlling the amount of the water based solution and/or the concentration of the reductant in the water based solution introduced into the cylinder in response of measured engine's load.

9. A method according to claim 1, **characterized by** step of monitoring one or more of reductant consumption, water consumption and fuel consumption and controlling the amount of the water based solution and/or the concentration of the reductant in the water based solution introduced into the cylinder in response of the monitored values.

10. A method according to claim 1, **characterized by** step of measuring engine's emissions and controlling the amount of the water based solution and/or the concentration of the reductant in the water based solution introduced into the cylinder in response of measured engine's emissions.

11. A method according to claim 1, **characterized by** step of receiving signals indicating geographical position of the engine and controlling the amount of the water based solution and/or the concentration of the reductant in the water based solution introduced into the cylinder in response to the signals indicating geographical position.

12. A method according to claim 1, **characterized in that** the step of controlling the emissions in the exhaust gas by a selective catalytic reduction stage (70) is performed upstream a turbine (44) of a last turbocharger (40) in the exhaust gas flow direction.

13. A method according to claim 1, **characterized in that** the step of controlling the emissions in the exhaust gas by a selective catalytic reduction stage (70) is performed downstream a turbine (44) of a last turbocharger (40) in the exhaust gas flow direction.

14. A method according to claim 1, **characterized in that** amount of water based solution expressed as a ratio of mass flow rate of water based solution to mass flow rate of fuel, WFR, wherein $0 < WFR < 1$.

15. An internal combustion piston engine (10) comprising an emission reduction arrangement (100), which engine (10) comprises

- an intake duct (14) for introducing intake air into cylinders (12) of the engine (10) and at least one intake valve (18) for each cylinder (12) of the engine (10) for opening and closing flow communication between the intake duct (14) and the cylinder (12),
- an exhaust duct (20) and at least one exhaust valve (22) for each cylinder (12) for opening and closing flow communication from the cylinder (12) to the exhaust duct (20),
- the emission reduction arrangement (100) is provided with means (50) to control the operation of the exhaust valve (22) for allowing internal exhaust gas recirculation from the exhaust duct (20) into the cylinders (12), and with a water based solution injection system (60), and
the exhaust duct (20) is further provided with a selective catalytic reduction (SCR) unit (70) arranged downstream of the engine (100), **char-**

**acterized in that** the water based solution injection system (60) is arranged to provide water based solution to the cylinders (12), and **in that** the emission reduction arrangement (100) is provided with a reductant admission system (91) in connection with the water based solution injection system (60) for controllably admitting reductant in to the water based solution for use in the selective catalytic reduction (SCR) unit (70).

16. An internal combustion piston engine (10) according to claim 15, **characterized in that** the emission reduction arrangement (100) comprises a computer control unit comprising executable instructions to carry out the method for operating the internal combustion piston engine according to claims 1-14.

**Patentansprüche**

1. Verfahren zum Betreiben einer Verbrennungskolbenkraftmaschine (10), wodurch, während die Kraftmaschine (10) läuft, die folgenden Schritte ausgeführt werden:

   - Öffnen eines Einlassventils (18) zum Einleiten von Ansaugluft in einen Zylinder (12) der Kraftmaschine (10) über eine Ansaugleitung (14),
   - Schließen des Einlassventils (18) während eines Ansaugtaktes vor dem unteren Totpunkt eines Kolbens in dem Zylinder (12),
   - Verdichten der Ansaugluft in dem Zylinder (12),
   - Einspeisen von Kraftstoff in den Zylinder (12) der Kraftmaschine (10) und Verbrennen des Kraftstoffs in dem Zylinder (12), was Abgas erzeugt,
   - Öffnen eines Auslassventils (22) des Zylinders (12) nach dem Verbrennen des Kraftstoffs, um das Abgas aus dem Zylinder (12) in eine Auspuffleitung (20) zu leiten,
   - Leiten eines Teils des Abgases aus der Auspuffleitung (20) zurück in den Zylinder (12) über das Auslassventil (22) während des Ansaugtaktes vor dem unteren Totpunkt, was folglich zu einer internen Abgasrückführung führt, und
   - Regeln der Emissionen in dem Abgas durch eine selektive katalytische Reduktionsstufe (70), die in der Auspuffleitung (20) stromabwärts von der Kraftmaschine (10) angeordnet ist,

   **dadurch gekennzeichnet, dass** das Verfahren den folgenden Schritt umfasst:

   - Einleiten einer wasserbasierten Lösung, die ein Reduktionsmittel enthält, in den Zylinder in der internen Abgasrückführungsstufe.

2. Verfahren nach Anspruch 1, **dadurch gekenn-**

**zeichnet, dass** das Reduktionsmittel in der wasserbasierten Lösung, die in den Zylinder eingeleitet wird, in der selektiven katalytischen Reduktionsstufe (70) verwendet wird.

3. Verfahren nach Anspruch 1, **dadurch gekennzeichnet, dass** nach dem Leiten von Abgas aus dem Zylinder (12) in die Auspuffleitung (20) das Auslassventil (22) erneut geöffnet wird, und Leiten eines Teils des Abgases aus der Auspuffleitung (20) zurück in den Zylinder (12) über das erneut geöffnete Auslassventil (22).

4. Verfahren nach Anspruch 1 oder 2, **dadurch gekennzeichnet, dass** das Reduktionsmittel Harnstoff ist.

5. Verfahren nach Anspruch 1 oder 2, **dadurch gekennzeichnet, dass** das Reduktionsmittel Ammoniak ist.

6. Verfahren nach Anspruch 1, **dadurch gekennzeichnet, dass** die wasserbasierte Lösung zum Kühlen des intern zurückgeführten Abgases und Verringern der Emissionserzeugung bei der Verbrennung in die Auslassöffnung (24) des Zylinders (12) eingepresst wird.

7. Verfahren nach Anspruch 1, **dadurch gekennzeichnet, dass** die wasserbasierte Lösung zum Kühlen des zurückgeführten Abgases in derselben und Verringern der Emissionserzeugung in dem Zylinder (12) unmittelbar in eine Verbrennungskammer des Zylinders (12) eingepresst wird.

8. Verfahren nach Anspruch 1, **gekennzeichnet durch** einen Schritt des Messens einer Last der Kraftmaschine und des Regelns der Menge der wasserbasierten Lösung und/oder der Konzentration des Reduktionsmittels in der wasserbasierten Lösung, die in den Zylinder eingeleitet wird, als Reaktion auf die gemessene Last der Kraftmaschine.

9. Verfahren nach Anspruch 1, **gekennzeichnet durch** einen Schritt des Überwachens eines oder mehrerer von Reduktionsmittelverbrauch, Wasserverbrauch und Kraftstoffverbrauch und des Regelns der Menge der wasserbasierten Lösung und/oder der Konzentration des Reduktionsmittels in der wasserbasierten Lösung, die in den Zylinder eingeleitet wird, als Reaktion auf die überwachten Werte.

10. Verfahren nach Anspruch 1, **gekennzeichnet durch** einen Schritt des Messens der Emissionen der Kraftmaschine und des Regelns der Menge der wasserbasierten Lösung und/oder der Konzentration des Reduktionsmittels in der wasserbasierten Lösung, die in den Zylinder eingeleitet wird, als Reaktion auf die gemessenen Emissionen der Kraftmaschine.

11. Verfahren nach Anspruch 1, **gekennzeichnet durch** einen Schritt des Empfangens von Signalen, die eine geographische Position der Kraftmaschine angeben, und des Regelns der Menge der wasserbasierten Lösung und/oder der Konzentration des Reduktionsmittels in der wasserbasierten Lösung, die in den Zylinder eingeleitet wird, als Reaktion auf die Signale, welche die geographische Position angeben.

12. Verfahren nach Anspruch 1, **dadurch gekennzeichnet, dass** der Schritt des Regelns der Emissionen in dem Abgas durch eine selektive katalytische Reduktionsstufe (70) stromaufwärts von einer Turbine (44) wenigstens eines Turboladers (40) in der Abgasströmungsrichtung durchgeführt wird.

13. Verfahren nach Anspruch 1, **dadurch gekennzeichnet, dass** der Schritt des Regelns der Emissionen in dem Abgas durch eine selektive katalytische Reduktionsstufe (70) stromabwärts von einer Turbine (44) wenigstens eines Turboladers (40) in der Abgasströmungsrichtung durchgeführt wird.

14. Verfahren nach Anspruch 1, **dadurch gekennzeichnet, dass** die Menge der wasserbasierten Lösung ausgedrückt wird als ein Verhältnis des Mengendurchflusses der wasserbasierten Lösung zu dem Mengendurchfluss an Kraftstoff, WFR, wobei 0 < WFR < 1.

15. Verbrennungskolbenkraftmaschine (10), die eine Emissionsminderungsanordnung (100) umfasst, wobei die Kraftmaschine (10) Folgendes umfasst:

    - eine Ansaugleitung (14) zum Einleiten von Ansaugluft in Zylinder (12) der Kraftmaschine (10) und wenigstens ein Einlassventil (18) für jeden Zylinder (12) der Kraftmaschine (10) zum Öffnen und Schließen einer Durchflussverbindung zwischen der Ansaugleitung (14) und dem Zylinder (12),
    - eine Auspuffleitung (20) und wenigstens ein Auslassventil (22) für jeden Zylinder (12) zum Öffnen und Schließen einer Durchflussverbindung von dem Zylinder (12) zu der Auspuffleitung (20),
    - die Emissionsminderungsanordnung (100), die mit Mitteln (50) versehen ist, um den Betrieb des Auslassventils (22) zu regeln, um eine interne Abgasrückführung aus der Auspuffleitung (20) in die Zylinder (12) zu ermöglichen, und mit einer Einspritzanlage (60) für eine wasserbasierte Lösung und wobei die Auspuffleitung (20) ferner mit einer Einheit (70) zur selektiven katalytischen Reduktion (selective catalytic reduction - SCR) versehen ist, die stromabwärts von der Kraftmaschine (100) angeordnet ist, **dadurch gekennzeichnet, dass** die Einspritzanlage (60) für eine wasserbasierte Lösung dafür angeordnet ist, eine wasserbasierte Lösung für die Zylinder (12) bereitzustellen, und dass die Emissionsminderungsanordnung (100) mit einem Reduktionsmittel-Zufuhranlage (91) in Verbindung mit der Einspritzanlage (60) für eine wasserbasierte Lösung versehen ist, zum regelbaren Zuführen von Reduktionsmittel zu der wasserbasierten Lösung zur Verwendung in der Einheit (70) zur selektiven katalytischen Reduktion (SCR).

16. Verbrennungskolbenkraftmaschine (10) nach Anspruch 15, **dadurch gekennzeichnet, dass** die Emissionsminderungsanordnung (100) eine Rechnersteuereinheit umfasst, die ausführbare Anweisungen umfasst, um das Verfahren zum Betreiben der Verbrennungskolbenkraftmaschine nach den Ansprüchen 1 bis 14 durchzuführen.

**Revendications**

1. Procédé pour la commande d'un moteur à piston à combustion interne (10), dans lequel les étapes suivantes sont exécutées pendant le fonctionnement du moteur (10) :

    - ouverture d'une soupape d'admission (18) pour introduire de l'air d'admission dans un cylindre (12) du moteur (10) par le biais d'un conduit d'admission (14),
    - fermeture de la soupape d'admission (18) pendant une course d'admission avant le point mort inférieur d'un piston dans le cylindre (12),
    - compression de l'air d'admission dans le cylindre (12),
    - apport de carburant dans le cylindre (12) du moteur (10) et combustion du carburant dans le cylindre (12) générant du gaz d'échappement,
    - ouverture d'une soupape d'échappement (22) du cylindre (12) après la combustion du carburant pour guider le gaz d'échappement du cylindre (12) vers un conduit d'échappement (20),
    - renvoi d'une partie du gaz d'échappement à partir du conduit d'échappement (20) vers le cylindre (12) par le biais de la soupape d'échappement (22) pendant la course d'admission avant le point mort inférieur, résultant ainsi dans un recyclage interne de gaz d'échappement, et
    - contrôle des émissions dans le gaz d'échappement par un étage de réduction catalytique sélective (70) disposé dans le conduit de gaz d'échappement (20) en aval du moteur (10),

**caractérisé en ce que** le procédé comprend l'étape supplémentaire suivante :

- introduction d'une solution à base d'eau contenant un réducteur dans le cylindre à l'étage de recyclage interne de gaz d'échappement.

2. Procédé selon la revendication 1, **caractérisé en ce que** le réducteur dans la solution à base d'eau introduite dans le cylindre est utilisé à l'étage de réduction catalytique sélective (70).

3. Procédé selon la revendication 1, **caractérisé en ce qu'**après le guidage de gaz d'échappement du cylindre (12) vers le conduit d'échappement (20), la soupape d'échappement (22) est réouverte et renvoie une partie du gaz d'échappement à partir du conduit d'échappement (20) vers le cylindre (12) par le biais de la soupape d'échappement (22) réouverte.

4. Procédé selon la revendication 1 ou 2, **caractérisé en ce que** le réducteur est de l'urée.

5. Procédé selon la revendication 1 ou 2, **caractérisé en ce que** le réducteur est de l'ammoniaque.

6. Procédé selon la revendication 1, **caractérisé en ce que** la solution à base d'eau est injectée par l'orifice d'échappement (24) du cylindre (12) pour refroidir le gaz d'échappement recyclé en interne et pour réduire la génération d'émissions dans la combustion.

7. Procédé selon la revendication 1, **caractérisé en ce que** la solution à base d'eau est injectée directement dans une chambre de combustion du cylindre (12) pour refroidir le gaz d'échappement recyclé dans celle-ci et pour réduire la génération d'émissions dans le cylindre (12) .

8. Procédé selon la revendication 1, **caractérisé par** l'étape consistant à mesurer la charge du moteur et à contrôler la quantité de solution à base d'eau et/ou la concentration du réducteur dans la solution à base d'eau introduite dans le cylindre en fonction de la charge de moteur mesurée.

9. Procédé selon la revendication 1, **caractérisé par** l'étape consistant à surveiller un ou plusieurs éléments parmi la consommation de réducteur, la consommation d'eau et la consommation de carburant et à contrôler la quantité de solution à base d'eau et/ou la concentration du réducteur dans la solution à base d'eau introduite dans le cylindre en fonction des valeurs surveillées.

10. Procédé selon la revendication 1, **caractérisé par** l'étape consistant à mesurer des émissions du moteur et à contrôler la quantité de solution à base d'eau et/ou la concentration du réducteur dans la solution à base d'eau introduite dans le cylindre en fonction des émissions de moteur mesurées.

11. Procédé selon la revendication 1, **caractérisé par** l'étape consistant à recevoir des signaux indiquant une position géographique du moteur et à contrôler la quantité de solution à base d'eau et/ou la concentration du réducteur dans la solution à base d'eau introduite dans le cylindre en fonction des signaux indiquant une position géographique.

12. Procédé selon la revendication 1, **caractérisé en ce que** l'étape consistant à contrôler les émissions dans le gaz d'échappement par un étage de réduction catalytique sélective (70) est exécutée en amont d'une turbine (44) d'un dernier turbocompresseur (40) dans la direction d'écoulement du gaz d'échappement.

13. Procédé selon la revendication 1, **caractérisé en ce que** l'étape consistant à contrôler les émissions dans le gaz d'échappement par un étage de réduction catalytique sélective (70) est exécutée en aval d'une turbine (44) d'un dernier turbocompresseur (40) dans la direction d'écoulement du gaz d'échappement.

14. Procédé selon la revendication 1, **caractérisé en ce que** la quantité de solution à base d'eau est exprimée comme un rapport du débit massique de la solution à base d'eau au débit massique du carburant, WFR, où $0 < WFR < 1$.

15. Moteur à piston à combustion interne (10) comprenant un dispositif de réduction des émissions (100), ledit moteur (10) comprenant :

- un conduit d'admission (14) destiné à introduire de l'air d'admission dans des cylindres (12) du moteur (10) et au moins une soupape d'admission (18) pour chaque cylindre (12) du moteur (10) pour ouvrir et fermer la communication fluidique entre le conduit d'admission (14) et le cylindre (12),
- un conduit d'échappement (20) et au moins une soupape d'échappement (22) pour chaque cylindre (12) pour ouvrir et fermer la communication fluidique du cylindre (12) vers le conduit d'échappement (20),
- le dispositif de réduction des émissions (100) est doté de moyens (50) pour contrôler le fonctionnement de la soupape d'échappement (22) pour permettre un recyclage interne de gaz d'échappement à partir du conduit d'échappement (20) vers les cylindres (12), et
avec un système d'injection de solution à base d'eau (60), et

le conduit d'échappement (20) est en outre doté d'une unité de réduction catalytique sélective (SCR) (70) disposée en aval du moteur (100), **caractérisé en ce que** le système d'injection de solution à base d'eau (60) est conçu pour fournir de la solution à base d'eau aux cylindres (12), et **en ce que** le dispositif de réduction des émissions (100) est doté d'un système de réception de réducteur (91) en connexion avec le système d'injection de solution à base d'eau (60) pour recevoir du réducteur de façon contrôlée dans la solution à base d'eau pour une utilisation dans l'unité de réduction catalytique sélective (SCR) (70).

16. Moteur à piston à combustion interne (10) selon la revendication 15, **caractérisé en ce que** le dispositif de réduction des émissions (100) comprend une unité de commande informatique comprenant des instructions exécutables pour la mise en oeuvre du procédé pour la commande du moteur à piston à combustion interne selon les revendications 1 à 14.

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6038860 A
- US 20090250041 A1
- US 2670595 A
- WO 2013124532 A1